# EUROPEAN PATENT SPECIFICATION

(11) **EP 2 477 867 B1**
(45) Date of publication and mention of the grant of the patent: **21.08.2013**
(21) Application number: 10754733.3
(22) Date of filing: 15.09.2010
(51) Int. Cl.: B61F 9/00

(54) **SUSPENSION FAILURE DETECTION IN A RAIL VEHICLE**
ERKENNUNG VON AUFHÄNGUNGSDEFEKTEN BEI EINEM SCHIENENFAHRZEUG
DÉTECTION DE DÉFAILLANCE DE SUSPENSION DANS UN VÉHICULE FERROVIAIRE

(30) Priority: 15.09.2009 GB 0916172
(43) Date of publication of application: 25.07.2012
(73) Proprietor: Bombardier Transportation GmbH, 10785 Berlin (DE)
(72) Inventor: SCHNEIDER, Richard, 8224 Löhningen (CH); BAERT, Mike, 8200 Brügge (BE)
(74) Representative: Cohausz & Florack
(86) International application number: PCT/EP2010/063563
(87) International publication number: WO 2011/032991

(56) References cited:
- WO-A1-01/81147
- DE-A1- 19 837 486
- JP-A- 2000 071 982
- JP-A- 2009 040 078
- JP-A- 2009 073 418

## Description

The present invention relates to a rail vehicle comprising a wagon body and a suspension system with a running gear supporting the wagon body. The present invention further relates to a method for detecting malfunction in a suspension system of such a rail vehicle.

In modern rail vehicles it is generally known to detect malfunctions within the suspension system of the rail vehicle which have an adverse effect on the running stability of the rail vehicle. Typically, vibration sensors or the like are used to capture actual values of status variables representative of the accelerations acting on specific component of the suspension system of a vehicle. The data obtained in this way are then analyzed in order to detect situations with excessive accelerations acting within the suspension system which are representative of a malfunction of the suspension system. If such a malfunction situation is detected, corresponding malfunction warning signals are issued in order to initiate appropriate countermeasures to avoid hazardous situations. Such systems are for example known from WO 01/81147 A1.

However, during operation of a rail vehicle unacceptable and potentially hazardous situations may not only result from an inappropriate vibrational behavior of the running gear of the vehicle. For example, excess lateral movements of the wagon body with respect to the running gear may lead to a violation of the kinematic envelope defined for the specific track the vehicle is negotiating. In order to avoid such violations of the kinematic envelope under any circumstances, typically, the outer contour of the wagon body and the suspension system of a rail vehicle are specifically adapted to the track system the vehicle is to be operated on.

Although, by this means, in a passive suspension system a violation of the kinematic envelope of the respective track may be effectively avoided, this approach has the disadvantage that it typically results, on the one hand, in a rather restricted outer contour of the wagon body which reduces the transport capacity of the vehicle and, on the other hand, in a rather rigid suspension of the wagon body which is undesirable in terms of passenger comfort.

A further problem exists for active suspension systems comprising, for example, and active tilt control of the wagon body with respect to the running gear (i.e. a control of the tilting angle or the rolling angle, respectively, of the wagon body about a tilting axis or rolling axis, respectively, extending along the longitudinal direction of the wagon body). In such systems, for example, a malfunction of the tilting control system may lead to the introduction of excessive excursions on the wagon body with respect to the running gear leading to violations of the kinematic envelope. The same applies to an active sway motion control of the wagon body.

A further problem that may arise with such active suspension systems is that, for example, a malfunction of the tilting control system may lead to the introduction of opposite lateral excursions of the wagon body with respect to the leading running gear and the trailing running gear. Such a situation, due to the specific kinematics of such a tilting system, would lead to a torsional loading of the wagon body leading to undesired unloading of some of the wheels of the running gears and, consequently, to a considerable increase in the risk of derailment.

Document JP-A-2000-071982 discloses the preamble of independent claims 1 and 11.

It is thus an object of the present invention to provide a rail vehicle as outlined above that, at least to some extent, overcomes the above disadvantages. It is a further object of the present invention to provide a rail vehicle that provides both, high transport capacity as well as high passenger comfort while ensuring safe and reliable operation under any circumstances. Finally, it is an object of the present invention to provide a method for detecting malfunction in a suspension system allowing realization of such a vehicle.

The above objects are achieved starting from a rail vehicle according to the preamble of claim 1 by the features of the characterizing part of claim 1. The above objects are further achieved starting from a method according to the preamble of claim 11 by the features of the characterizing part of claim 11.

The present invention is based on the technical teaching that safe and reliable operation of a rail vehicle providing high transport capacity as well as high passenger comfort while at the same time reducing the risk of inadvertent violations of the kinematic envelope of a given track to be negotiated or reducing the risk of derailment may be achieved by implementing a monitoring system monitoring the spatial relationship between a predefined first reference part associated to the running gear and a predefined second reference part associated to the wagon body. Monitoring of this spatial relationship allows performing a malfunction analysis identifying presence of a malfunction situation where a predefined risk level for a violation of the kinematic envelope or a predefined risk level for a derailment risk is exceeded. In such a malfunction situation a malfunction signal may be issued which, in turn, may be used to initiate predefined countermeasures to significantly reduce this risk level below a given value.

It will be appreciated that, in the sense of the present invention, the spatial relationship between the running gear and the wagon body may be defined in one or more of the six degrees of freedom (DOF) available in space. Furthermore, relative motion between the running gear and the wagon body in one or more of these degrees of freedom may be considered in the malfunction analysis. More precisely, any change in position (i.e. motion in any of the three translational degrees of freedom) as well as any change in orientation (i.e. motion in any of the three rotational degrees of freedom) may be considered (alone or in an arbitrary combination) in the malfunction analysis.

Survey of the system for such a malfunction situation allows realizing active suspension systems with an active control of the spatial relation between the running gear and the wagon body. Such an active control, on the one hand, allows maximizing the outer contour and, consequently, transport capacity of the wagon body since the spatial relationship of the wagon body with respect to the running gear (and, consequently, with respect to the kinematic envelope) may be actively adapted to a given kinematic envelope. Furthermore, such an active suspension system may be optimized in terms of the passenger comfort since its rigidity and damping characteristics may be actively adapted to the current running situation of the vehicle. Thanks to the malfunction survey according to the invention, both advantages are achieved without increasing the risk of a violation of the kinematic envelope or the derailment risk.

By this means, an active vehicle suspension system may be achieved that fulfils sophisticated safety requirements. The components co-operating in the malfunction analysis may be provided in a redundant manner and/or may be provided with reliable function testing facilities (e.g. testing circuitry that regularly tests proper operation of the respective component) in order to enhance the safety level of the system. In particular, with the invention, a vehicle suspension system may be achieved that fulfils safety requirements as specified in standards such as IEC 61508, IEC 61508, EN 50126 to EN 50129. More precisely, a safety integrity level (SIL as defined in some of these standards) up to a level 2 (SIL2) and more may be achieved.

Thus, according to a first aspect, the invention relates to a rail vehicle, comprising a wagon body and a suspension system, said suspension system comprising a running gear supporting said wagon body. A sensor device and a control device are provided. The sensor device captures an actual value of at least one status variable, said status variable being representative of a spatial relationship between a first reference part of the sensor device associated to a part of the running gear and a second reference part of the sensor device associated to the wagon body. The control device performs a malfunction analysis using said actual value of said status variable, said malfunction analysis assessing fulfillment of at least one predetermined malfunction criterion. Finally, the control device provides a malfunction signal if said malfunction analysis reveals that the malfunction criterion is fulfilled.

It will be appreciated in this context that either one of these first and second reference parts does not necessarily have to be rigidly connected to a part of the running gear and the wagon body, respectively. Rather, it may suffice that a sufficiently precisely known spatial relation exists between the respective reference part and the component it is associated to in order to assess the actual spatial relationship of interest.

Furthermore, it will be appreciated that, in the simplest case of such a malfunction analysis, the actual value of the status variable captured by the sensor device may be used as a simple comparison value which is then compared to a simple threshold value in order to assess if a malfunction situation exists (e.g. in case the threshold value is exceeded by the actual captured value of the status variable). However, in other preferred variants, the malfunction analysis may be based on a plurality of captured values which are then analysed according to one or more given malfunction criteria. For example, in the malfunction analysis, it may be assessed for a given plurality of N values of the status variable captured in a given time interval if a given malfunction threshold has been exceeded more than M times (malfunction criterion). If this is the case, the control device may determine that a malfunction situation exists and may issue the malfunction signal.

It will be further appreciated that, of course, one or more further arbitrarily sophisticated malfunction criteria may be used (in addition or as an alternative) in the malfunction analysis. In particular, at least one further status variable (i.e. an additional, different status variable) captured by the sensor device may be considered in the malfunction analysis.

The status variable may be any suitable variable that is representative of the spatial relation (position and/or orientation) between the first reference part and the second reference part (and, consequently, between the running gear and the wagon body) in one or more of the available six degrees of freedom. The respective selected degree(s) of freedom depend(s) on the direction of the respective motion(s) to be considered that could lead to a violation of the kinematic envelope or to an inadmissible increase in the derailment risk.

Preferably, the rail vehicle defines a longitudinal direction, a transverse direction and a height direction and the status variable is representative of a transverse displacement between the first reference part and the second reference part in the transverse direction. By this means, transverse motion (also called lateral motion or sway motion) of the wagon body with respect to the running gear may be considered in the malfunction analysis. This is of particular advantage since, especially when negotiating comparatively narrow curves (comparatively small radius of curvature) with a vehicle having a comparatively long wagon body, this transverse motion typically is the main limiting factor to respect the kinematic envelope. Furthermore excess opposite transverse motion with respect to a leading running gear and a trailing running gear may be the crucial factor in assessing the derailment risk.

In addition or as an alternative, the status variable may be representative of an angular yaw displacement between the first reference part and the second reference part about the height direction. Again, especially when negotiating comparatively narrow curves with a vehicle having a comparatively long wagon body, this yaw motion also provides an indication of the transverse motion of the wagon body.

Depending on the type of vehicle, in particular depending on the length of the wagon body (i.e. its dimension along the longitudinal direction of the vehicle), the characteristics of the sensor device and/or the control device may be defined in a static manner. For example, especially with relatively short wagon bodies, a simple sensor device with a static sensitivity characteristic in the transverse direction may be sufficient to detect an excess lateral or transverse movement between the running gear and the wagon body under any operating condition of the rail vehicle (i.e. irrespective of the running speed, the curvature of the track, the superelevation of the track etc).

However, in particular with longer wagon bodies (showing a considerable transverse displacement with respect to the track center at locations remote from the running gear) it is preferred that the sensor device and/or the control device provides an adaptation of the malfunction analysis to an actual running condition of the rail vehicle. In this case, the actual running condition may, for example, be defined by a running speed of the vehicle and/or a running direction of the vehicle and/or a track geometry of a track currently negotiated by the vehicle. The track geometry may be defined by any suitable track parameter. Preferably, the track geometry is defined by at least one of a curvature of the track, a superelevation of the track and a torsion value of the track. By this means it is easily possible to properly define (operation condition dependent) allowable limits of the relative motion between the running gear and the wagon body and to consider these limits in the malfunction analysis.

For example, for a comparatively long wagon body, the admissible value of a transverse excursion of the wagon body with respect to the running gear detected in the region of the running gear may be considerably smaller on a curved, superelevated track than on a straight, level track. This is due to the fact that, at a location remote from the running gear, a considerable transverse excursion of the wagon body (with respect to the track center) merely results from the track geometry such that, in order to respect a given kinematic envelope, only a considerably smaller additional transverse deflection may be admissible in the area of the running gear (where the detection of this excursion takes place).

With preferred embodiments of the invention, an active adaptation of the malfunction analysis to the actual running or operating condition of the vehicle takes place. To this end, preferably, the sensor device comprises a running condition sensor unit capturing an actual value of a running condition variable, the running condition variable being representative of the actual running condition of the rail vehicle. The control device executes the malfunction analysis as a function of the actual value of the running condition variable provided by the running condition sensor unit.

To this end, any suitable variable representative of the actual running condition of the rail vehicle may be used. For example, the adaptation of the malfunction analysis takes place as a function of at least one variable representative of the actual curvature of the track currently negotiated (as the running condition variable). As outlined above, the control device may adjust the admissible limit for a transverse deflection (applied in the malfunction analysis) as a function of the curvature currently detected (as the running condition variable).

In addition or as an alternative, the sensor device may modify its capturing behavior of the status variable as a function of the actual value of the running condition variable. This may be done in an active way as well, i.e. as a function of the actual value of a running condition variable captured by and/or provided to the sensor device.

However, with other embodiments of the invention (preferred due to their very simple and robust design), a purely passive solution may be implemented. In such a purely passive variant, the capturing behavior of the sensor device (e.g. its sensitivity characteristic) automatically (passively) changes as a function of the respective running condition of the rail vehicle.

Such a passive adaptation may be simply achieved by an appropriate arrangement of the components of the sensor device. For example, the first and second reference part may be arranged such that their relative position changes in the transverse direction with a yaw movement (i.e. a rotation about a yaw axis parallel to the height direction and defined by the suspension system at) of the wagon body with respect to the running gear as it occurs as a function of the curvature of the track currently negotiated. The distance of the first and second parts of the sensor device with respect to the yaw axis may be selected such that the yaw movement related transverse displacement leads to a reduction of any further transverse displacement that is admissible until the malfunction analysis detects a malfunction situation.

Furthermore, with other embodiments of the invention, the geometry and/or on the sensitivity characteristic of the first and/or second reference part may be adapted to provide the desired passive adaptation of the capturing behavior of the sensor device. For example, a sensor element (forming one of the first and second reference part of the sensor device) may cooperate with a reference element (forming the other one of the first and second reference part) to provide a detection signal. The sensor element may have a direction dependent sensitivity, i.e. a sensitivity depending on the respective detection direction (e.g. in such a manner that the detection signal is provided at given, eventually different, distances between the sensor element and the second reference element in the respective detection direction). The direction dependent sensitivity of the sensor element may then be adapted to the specific application in such a manner that, upon a certain change in the relative position between the first and second reference part (i.e. a change in the relative position between the running gear and the wagon body) due to the current operation situation, said detection signal is provided at different transverse displacements between the running gear and the wagon body.

Finally, for a sensor with a direction independent sensitivity (over its usable field of view) such a result may also be obtained by adapting the geometry the reference element in order to provide the desired adaptation of the malfunction analysis to the respective operation situation or running condition of the vehicle, respectively. Obviously, arbitrary combinations of the above variants of adaptation of the malfunction analysis may be used.

Thus, with preferred variants of the rail vehicle according to the invention, the sensor device comprises a status variable sensor unit capturing the actual value of the status variable in a sensing direction. The status variable sensor unit has a capturing behavior in the sensing direction, in particular, a sensitivity in the sensing direction, that varies as a function of the actual running condition of the rail vehicle. The status variable sensor unit may have any capturing characteristic suitable for the respective adaptation. Preferably, the status variable sensor unit, at least section wise, has a linear and/or spherical capturing characteristic.

In very simple and robust embodiments, the status variable sensor unit comprises a sensing element and an associated reference element, the sensing element capturing a value representative of at least one distance between the sensing element and the reference element as the actual value of the status variable in the sensing direction. The sensing element forms the first reference part or the second reference part and the reference element forms the other one of the first reference part and the second reference part. As outlined above, the sensing element and the reference element may be arranged such that, at least in the sensing direction, a relative position between the sensing element and the reference element varies as a function of the actual running condition of the rail vehicle to provide the variation in the capturing behavior in the sensing direction. In very simple designs, the sensing element and the reference element may be arranged at a distance, in particular at a distance along the longitudinal direction, from a yaw axis defined by the suspension system between the running gear and the wagon body.

In principle, any sensor providing a signal representative of the spatial relation between the first and second reference part may be used for the sensor device. Preferably, the sensor device comprises a least one distance sensor capturing a least one value representative of a distance between the first reference part and the second reference part.

It will be appreciated that the sensor device does not necessarily have to provide a continuous measurement of the spatial relation between the first and second reference part in one or more directions. Rather, for the malfunction analysis to be performed, it may be sufficient that the sensor unit only provides a corresponding detection signal when a predetermined spatial relation between the first and second reference part is reached. For example, a simple binary signal may be sufficient indicating that a certain distance between the first and second reference part has been exceeded (e.g. signal level: 1) or not (e.g. signal level: 0). Thus, preferably, the at least one distance sensor may be designed in the manner of an proximity switch which typically provides such a simple binary signal.

The sensor device, in principle, may be arranged at any suitable location within the rail vehicle in order to provide the actual value of the desired status variable. Preferably, the wagon body is supported on the running gear via a secondary spring system of the suspension system and the first reference part and the second reference part are arranged kinematically parallel to at least a part of the secondary spring system.

As mentioned above, the second reference part does not necessarily have to be rigidly connected to the wagon body. Thus, with preferred embodiments of the invention, the first reference part is connected to a first part of the running gear while the second reference part is connected to a second part of the running gear, in particular to a bolster supported via a part of the secondary spring system on the first part of the running gear. With other embodiments, however, the second reference part may also be connected to the wagon body.

Furthermore, any suitable location may be chosen for the first and second reference part. With certain, rather compact embodiments of the invention, the first reference part and/or the second reference part are integrated into a component of the secondary spring system, in particular an airspring of the secondary spring system. Comparably compact arrangements may also be achieved if the first reference part and/or the second reference part are integrated into an actuator device generating adjustment forces and/or adjustment movements between the running gear and the wagon body.

The malfunction signal may be used in an arbitrary way within the vehicle. For example, in the simplest case, the malfunction signal is used to trigger an audio and/or video signal by which the driver of the vehicle and/or a remote control center is notified of the malfunction situation. The driver and/or the remote control center may then initiate appropriate countermeasures against the potentially hazardous malfunction situation.

However, preferably, the malfunction signal is used to automatically initiate appropriate countermeasures. For example, of the malfunction signal itself may be used to control components of the active suspension system. Thus, with advantageous embodiments of the invention, the suspension system comprises a force exerting device, the force exerting device, under control of the control device, exerting a force within the suspension system that influences the at least one status variable.

The force exerting device preferably modifies its operation as a function of the malfunction signal in order to counteract the inappropriate operation in such a malfunction situation. This may be done in various ways. For example, it may be provided that the force exerting device, upon receipt of the malfunction signal, switches into a mode wherein it counteracts any motion which could potentially aggravate the malfunction situation.

With embodiments, where the force exerting device itself is a potential source of the malfunction, preferably, the force exerting device switches into a deactivated mode of operation in response to the malfunction signal.

Furthermore, the force exerting device may be adapted to exert, in the deactivated mode of operation, a resetting force within the suspension system, the resetting force acting to reset the wagon body into a predetermined neutral position with respect to the running gear. By this means, a reliable reduction of the risk associated with the malfunction may be achieved.

The force exerting device may be of any suitable design as well as located at arbitrary suitable locations within the suspension system. Preferably, the force exerting device comprises an actuator device, in particular a tilt actuator adjusting a tilt angle of the wagon body about a tilt axis running in a longitudinal direction of the vehicle. In addition or as an alternative, the force exerting device comprises a damper device, in particular a yaw damper device, damping movements between the running gear and the wagon. As mentioned above, in addition or as an alternative, the first reference part and/or the second reference part may be integrated into a component of the force exerting device, in particular in an actuator device of the force exerting device, leading to an advantageously compact design.

It will be appreciated in this context that the first and second reference part may be any suitable part of the force exerting device executing a defined relative motion when exerting the force within the suspension system influencing the at least one status variable. Furthermore, it will be appreciated that, in this case, relative motion does not necessarily have to be directly measured between the first and second reference part. Rather, as outlined above, it may be provided that the sensor device captures an actual value of at least one status variable representative of a spatial relationship between the first and second reference part.

For example, if the force exerting device is a hydraulic actuator with a piston and a cylinder (together defining a working chamber of the actuator), the sensor device may simply capture the degree of filling of the working chamber (by suitable means) which is also representative of the relative position between the piston (e.g. forming the first reference element) and the cylinder (e.g. forming the second reference element).

The present invention further relates to a method for detecting malfunction in a suspension system of a rail vehicle with a wagon body and a suspension system comprising a running gear supporting the wagon body, wherein an actual value of at least one status variable is captured, the status variable being representative of a spatial relationship between a first reference part associated to the running gear and a second reference part associated to the wagon body. Furthermore, a malfunction analysis is performed using said actual value of said status variable, said malfunction analysis assessing fulfillment of at least one predetermined malfunction criterion. A malfunction signal is provided if the malfunction analysis reveals that the malfunction criterion is fulfilled. With this method the advantages and embodiments as outlined above in the context of the rail vehicle may be achieved to the same extent such that it is here only referred to the explanations given above.

Further embodiments of the present invention will become apparent from the dependent claims and the following description of preferred embodiments which refers to the appended figures.
- Figure 1: is a schematic sectional representation of a preferred embodiment of a vehicle according to the present invention (seen along line I-I of Figure 3) with which a preferred embodiment of the method according to the invention may be executed;
- Figure 2: is a schematic representation of a detail of the vehicle of Figure 1 seen from below (i.e. from track level as indicated by line II-II in Figure 3);
- Figure 3: is a schematic side view of the vehicle of Figure 1;
- Figure 4A: is a schematic detailed view of a part of the vehicle of Figure 1;
- Figure 4B: is a schematic block diagram of a part of the vehicle of Figure 1;
- Figure 4C: is a schematic block diagram of an alternative outlay of the part of the vehicle shown in Figure 4A;
- Figure 5: is a schematic sectional view of a further preferred embodiment of the vehicle according to the present invention (in a view similar to the one of Figure 2).
- Figure 6: is a schematic sectional view of a further preferred embodiment of the vehicle according to the present invention (in a view similar to the one of Figure 2).

### First embodiment

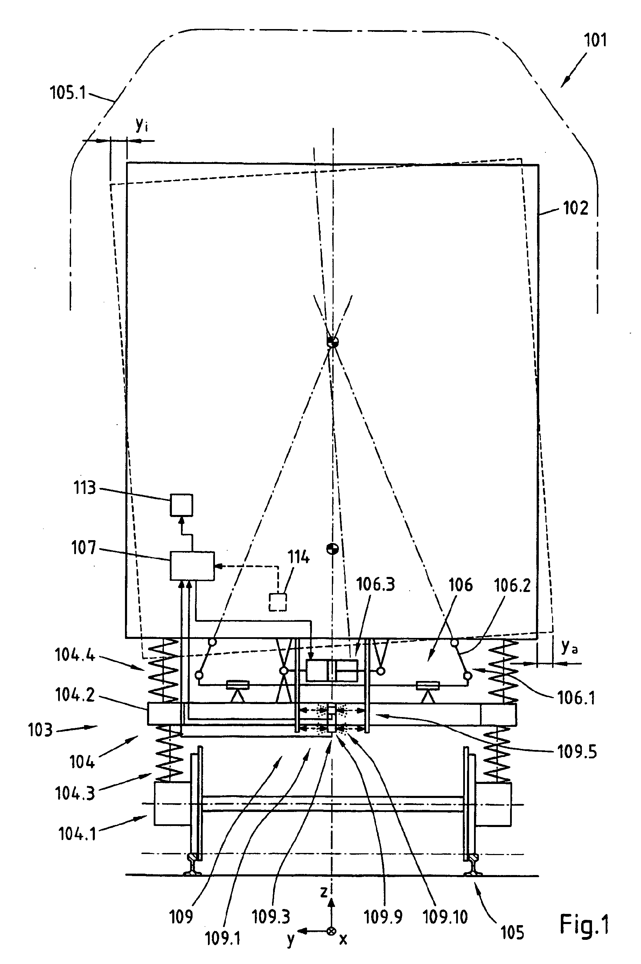

With reference to Figures 1 to 4 a preferred embodiment of a rail vehicle 101 according to the present invention will now be described in greater detail. In order to simplify the explanations given below, and xyz-coordinate system has been introduced into the Figures, wherein (on a straight, level track) the x-axis designates the longitudinal direction of the vehicle 101, the y-axis designates the transverse direction of the vehicle 101 and the z-axis designates the height direction of the vehicle 101.

The vehicle 101 comprises a wagon body 102 supported by a suspension system 103. The suspension system 103 comprises two running gears 104 sitting on a track 105 and supporting the wagon body 102. Each running gear 104 comprises two wheel sets 104.1 supporting a running gear frame 104.2 via a primary spring unit 104.3. The running gear frame 104.2 supports the wagon body 102 via a secondary spring unit 104.4.

The suspension system 103 comprises an active tilting unit 106 arranged kinematically parallel to the secondary spring unit 104.4. The tilting unit 106 forms an active part of the suspension system 103 and serves to adjust a tilting or rolling angle α_{w} about a tilting or rolling axis arranged in parallel to the longitudinal direction (x-axis) of the vehicle 101. To this end, the tilting unit 106 comprises a well-known rolling support 106.1 hinged to the running gear frame 104.2 and to the wagon body 102. The rolling support 106.1 comprises inwardly inclined links 106.2 providing, in a well-known manner, a tilting effect upon a lateral excursion of the wagon body 102, i.e. a relative excursion of the wagon body 102 with respect to the running gear 104 in the transverse direction (y-axis).

The tilting unit 106 further comprises an active force exerting device in the form of a tilting actuator 106.3 connected to, both, the running gear frame 104.2 and the wagon body 102. The tilting actuator 106, under the control of a control device in the form of a control unit 107, serves to actively adjust the tilting angle α as a function of the current running condition of the vehicle 101. Typically, the tilting control algorithms implemented in the control unit 107 adapted to avoid (under proper operation) any violation of the kinematic envelope 105.1 specified for the respective track 105 the vehicle 101 is to be operated on.

Obviously, it is absolutely mandatory that the kinematic envelope 105.1 is respected under any operating condition of any vehicle operated on the track 105, in particular, also under a failure condition of any active components of a tilting system of the vehicle. With conventional vehicles, this requirement is fulfilled by limiting, both, the outer contour of the wagon body and the transverse movement of the wagon body (e.g. by mechanical stops or the like). However, on the one hand, the restriction to the outer contour of the wagon body has adverse effect of reducing its transport capacity. On the other hand, limiting lateral excursions by mechanical stops also has its drawbacks since these stops have to be designed to fit the worst-case scenario, i.e. the operating condition of the vehicle in a given kinematic envelope with the severest limitations to the lateral excursions. Thus, eventually, under operating conditions different from this worst-case scenario (i.e. in situations with less severe limitations to the lateral excursions) a desirable range of lateral excursions, despite being admissible in a given kinematic envelope, may not be obtained.

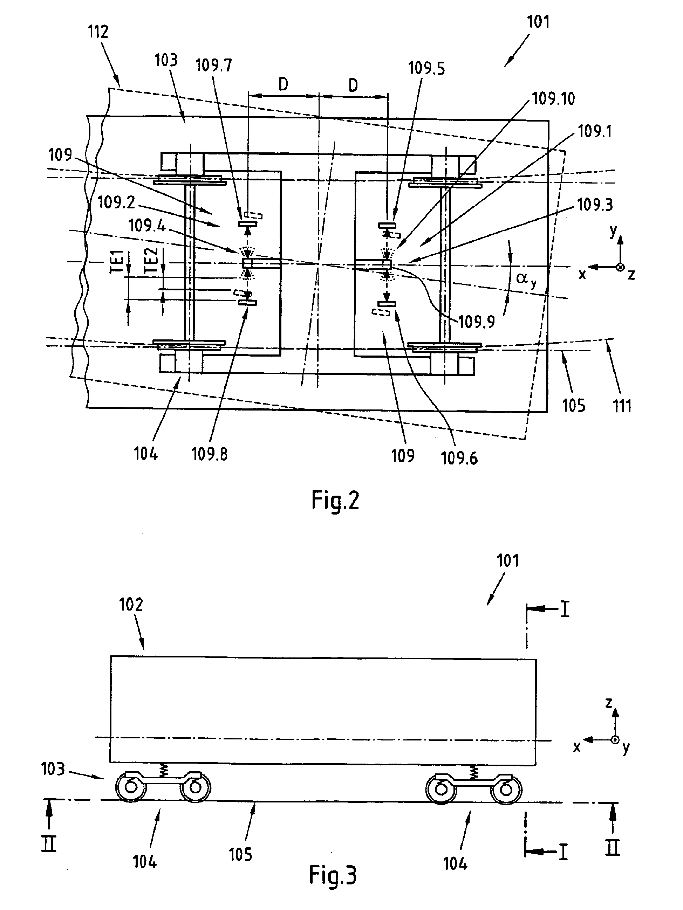

To avoid these problems the vehicle 101 according to the invention comprises a sensor device 109 which is connected to the control unit 107. The sensor device 109 comprises two sensor arrangements 109.1 and 109.2, each comprising a sensor unit 109.3 and 109.4 and associated reference elements 109.5 to 109.8, respectively. The sensor units 109.3 and 109.4 are mechanically connected to the running gear frame 104.2 while the (plate shaped) reference elements 109.5 to 109.8 mechanically connected to the wagon body 102 such that, in the neutral state shown in Figure 1 and 2 a certain transverse distance (in the γ-direction) lies between the sensor unit 109.3 and 109.4 and the surface of the respective associated reference element 109.5 to 109.8.

In the sense of the present invention, the sensor units 109.3 and 109.4 form first reference parts of the sensor device 109 while the reference elements 109.5 to 109.8 form second reference parts of the sensor device 109. Each sensor unit 109.3 and 109.4 comprises two sensor elements 109.9 associated to each of the reference elements 109.5 to 109.8.

Thus, in the embodiment shown, eight sensor elements 109.9 are provided. However, with other embodiments of the invention, any other suitable number of sensor elements may be selected, in particular, depending on the selected redundancy level and the required sensors for the malfunction algorithm. Preferably, the number of sensors will be at least two up to eight.

Each sensor element 109.9 has a predetermined capturing characteristic or a sensitivity characteristic, respectively, defined by a confined field of sight 109.10 which is mainly directed in the transverse direction (y-axis). In the embodiment shown, each sensor unit 109.3 and 109.4 is a simple distance sensor designed in the manner of a proximity switch. More precisely, each sensor element 109.9 provides a binary signal, the signal level being "0" as long as the associated reference element 109.5 to 109.8, respectively, does not interfere with the field of sight 109.10, and the signal level switching to "1" as soon as the associated reference element 109.5 to 109.8, respectively, interferes with the field of sight 109.10.

Thus, in the sense of the present invention, the signal provided by each sensor element 109.9 represents an actual value of a status variable which is representative of the spatial relation between the respective first reference parts (sensor units 109.3 and 109.4, respectively) and the associated second reference parts (reference elements 109.5 to 109.8, respectively), namely their mutual distance in the transverse direction (y-axis). Since the first and second reference parts are connected to the running gear 104 and the wagon body 102, respectively, these actual values (of the status variable) are also representative of the spatial relation between the running gear 104 and the wagon body 102 in the transverse direction (y-axis).

The control unit 107 is adapted to control the operation of the actuator unit 106.3 in such a manner that, under any operating or running condition of the vehicle 101, the kinematic envelope 105.1 and a given derailment risk level is respected. To this end, the control unit receives the signals from the sensor elements 109.9 and performs a malfunction analysis using these signals.

In the simplest case of such a malfunction analysis, the actual value of the signals provided by the respective sensor device 109 is used as a simple comparison value which is then compared to a simple threshold value in order to assess if a malfunction situation exists. With the simple binary signals provided by the respective sensor device 109, the control unit 107 simply performs a check if one of the signals of the sensor elements 109.9 is at level "1" (i.e. the control unit 107 performs a check if the threshold value "1" is reached by one of the actual captured values of the status variable). If this is the case, i.e. if the malfunction criterion is fulfilled, the control unit 107 issues a malfunction signal.

However, in other variants, the malfunction analysis may be assessed for a given plurality of N discrete values of the signals of the sensor element 109.9 in a given time interval T if a given malfunction threshold has been exceeded more than M times (malfunction criterion). If this is the case, the control unit 107 may determine that a malfunction situation exists and may issue the malfunction signal.

In the embodiment shown, the control unit 107, on the one hand uses this malfunction signal as a signal to issue a notification to the driver of the vehicle 101 of the malfunction situation via a signaling device 113.

Furthermore, in the embodiment shown, the control unit 107 uses this malfunction signal as a signal to switch off or deactivate the actuator 106.3. Depending on the rigidity of the suspension system, in particular the rigidity of the secondary spring device 104.4, this may be sufficient to avoid violation of the kinematic envelope 105.1 under any circumstances. However, if this is not the case, it may be provided that the actuator 106.3 itself or any other component acting between the running gear 104 and the wagon body 102, in this deactivated state of the actuator 106.3, exerts a resetting force on the wagon body 102 which acts to return the wagon body 102 to its neutral position (α_{w} = 0) as it is shown in Figure 1.

As can be seen from Figure 2 (in the neutral state of the vehicle 101 standing on a straight level track) the sensor units 109.3 and 109.4 are located at a distance D (in the longitudinal direction) from the yaw axis (arranged parallel to the height axis or z-axis, respectively) defined between the running gear 104 and the wagon body 102. This has the effect that, when negotiating a curved track (as it is indicated in Figure 2 by the double-dot-dashed contour 111), the wagon body 102 with the reference elements 109.5 to 109.8 exerts a yaw movement (i.e. rotates about the yaw axis by a yaw angle α_{y}) leading to a noticeably modified distance in the transverse direction (y-axis) between the sensor units 109.3, 109.4 and the reference elements 109.5 to 109.8 as it is indicated by the dashed contour 112 in Figure 2.

Thus, while there is an (admissible) lateral excursion TE1 between the wagon body 102 and the running gear 104 until the control unit 107 issues the malfunction signal (e.g. due to the interference of the reference element 109.8 with the field of view 109.10 of the associated sensor element 109.9), on a curved track 111, the (admissible) lateral excursion TE2 between the wagon body 102 and the running gear 104 until the control unit 107 issues the malfunction signal is considerably reduced. This has the beneficial effect that the malfunction analysis provided by the control unit 107 is automatically adapted to the running situation of the vehicle 101 in a simple, passive way.

This adaptive survey of the suspension system 103 for a malfunction situation allows realizing a system with an active control of the spatial relation between the running gear 104 and the wagon body 102. The active control allows maximizing the outer contour and, consequently, the transport capacity of the wagon body 102 since the spatial relationship of the wagon body 102 with respect to the running gear 104 may be actively adapted to a given kinematic envelope 105.1. Furthermore, the active suspension system 103 may be optimized in terms of the passenger comfort since its rigidity and damping characteristics may be actively adapted to the current running situation of the vehicle 101. Thanks to the malfunction survey according to the invention, both advantages are achieved without increasing the risk of a violation of the kinematic envelope 105.1.

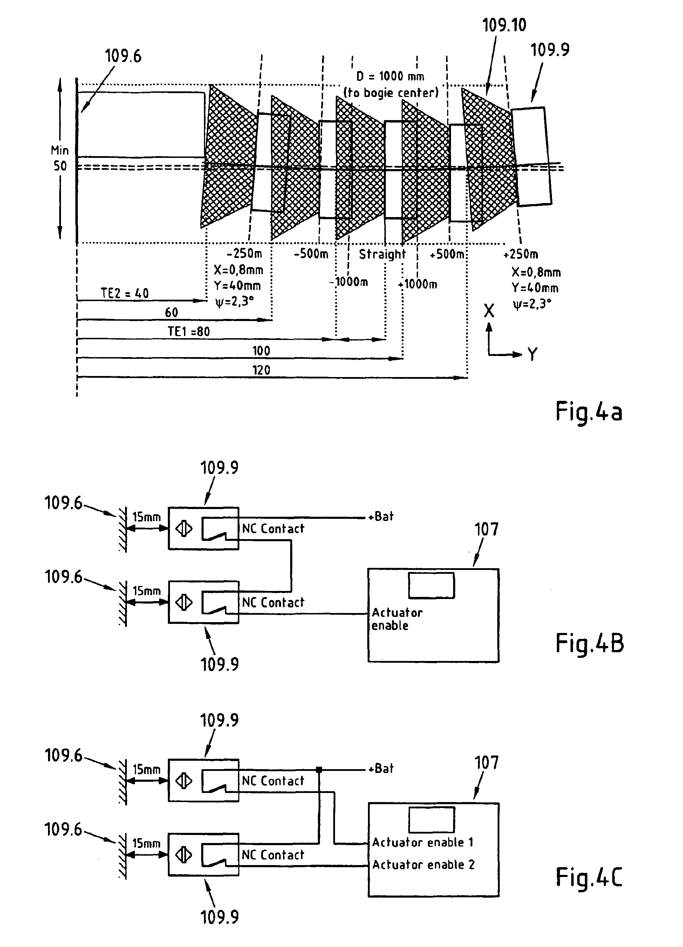

Exemplary dimensions for the arrangement of a sensor element 109.9 and an associated reference element 109.6 and its location in the suspension system are given in Figure 4A for different radii of curvature of the track negotiated (unless otherwise stated, all dimensions are given in millimeters). As can be seen easily from Figure 4A, depending on the radius of curvature of the track (-250 m, -500 m etc.)

As can be seen from figure 4A at a straight track the distance of the reference element 109.6 to the sensor element 109.9 is 95 mm (80 mm allowed movement and 15 mm detection zone or field of sight, respectively, of the sensor element 109.9). The sensor element has to move 40 mm towards the reference element 109.6 for curves with a radius of curvature of R = - 250 m, in order to restrict the transverse wagon body movement to 40 mm (80 mm - 40 mm = 40 mm). It will be appreciated that, of course, with other embodiments of the invention, any dimension (other than 15 mm) may be selected for the detection zone or field of sight, respectively, of the sensor element 109.9.

To this end, the sensor element 109.9 has to be placed at a certain longitudinal distance D = 1000 mm from the yaw axis located centrally in the running gear 104 to have this displacement with the a yaw angle α_{y} = 2.3° (resulting for the vehicle 101 at such a radius of curvature R). Obviously, this distance D depends on the longitudinal distance between the two running gears 104, since the latter defines the yaw angle α_{y} at any curvature of the track.

For positive curves the sensor element 109.9 moves further away from the reference element 109.6 (e.g. to 100 mm for R = +500 m). For smaller curves of R = +250 m, the sensor element 109.9 moves even further away. This, however, may have no specific influence in cases where the actuator 106.3 is limited to a certain stroke in this direction (here e.g. to a maximum stroke of 100 mm in this direction). It should be noted that, in such cases, it might even be sufficient to omit detection on one side of the wagon body 102, i.e. to omit reference elements 109.5 and 109.7 and to use reference elements 109.6 and 109.8 only.

Depending on the shape of the field of sight 109.10 of the sensor element 109.1 there may be a small error due to the angle of rotation of the sensor on current tracks. To minimize this error, the sensor element 109.1 is best placed in the longitudinal center line of the running gear 104.

The reference elements 109.5 to 109.8 preferably have a surface area of at least 45 mm x 45 mm for a sensor element 109.9 working with inductive detection. Preferably the surface area is larger to allow longitudinal and vertical movements between the sensor element 109.9 and the respective reference element 109.5 to 19.8. However, it will be appreciated that, with other embodiment of the invention, any other type of sensor element may be used working with a different detection principle, e.g. optical, electrical, mechanical principles alone or in arbitrary combination.

With the invention an active vehicle suspension system may be achieved that fulfils sophisticated safety requirements. As can be seen from Figure 1 two sensor elements 109.9 provided her reference element 109.5 to 109.9 to provide a redundant arrangement.

Figures 4B and 4C show different exemplary wiring possibilities for these two redundantly arranged sensor elements 109.9, namely a serial arrangement (Figure 4B) and a parallel arrangement (Figure 4C). The parallel arrangement shown in Figure 4C is preferred under the aspect of testing since it allows recognizing a failure of one of the sensor elements 109.9 (to prevent dormant failures). In any case, reliable function testing facilities (e.g. testing circuitry that regularly tests proper operation of the respective component) may be provided in order to enhance the safety level of the system. Thus, with the invention, a vehicle suspension system 103 may be achieved that fulfils safety requirements as specified in standards such as IEC 61508, IEC 61508, EN 50126 to EN 50129. More precisely, a safety integrity level (SIL as defined in some of these standards) up to a level 2 (SIL2) and more may be achieved.

It will be appreciated that, with other embodiments of the invention, the above (running condition dependent) adaptive malfunction analysis may also be achieved actively. To this end, the actual running condition may, for example, be defined by a running speed of the vehicle and/or a running direction of the vehicle and/or a track geometry of a track currently negotiated by the vehicle, and at least one running condition sensor (as indicated by the dashed contour 114 in Figure 1) of the sensor device may capture one or more suitable running condition variables representative of these specific components defining the actual running condition.

In this case, the control device 107 executes the malfunction analysis as a function of the actual value of the running condition variable provided by the running condition sensor unit 114. Any suitable variable representative of the actual running condition of the rail vehicle may be used. For example, the adaptation of the malfunction analysis takes place as a function of at least one variable representative of the actual curvature of the track currently negotiated (as the running condition variable). As outlined above, the control device may adjust the admissible limit for a transverse deflection (applied in the malfunction analysis) as a function of the curvature currently detected by the running condition sensor 114. In such a case, it may be sufficient to have one single sensor element 109.9 capturing the distance to the reference element 109.6 at a sufficiently high resolution.

In addition or as an alternative, the sensor device may modify its capturing behavior (e.g. the shape and/or size of its field of sight 109.10) as a function of the actual value of the running condition variable. This may be done in an active way as well, i.e. as a function of the actual value of a running condition variable captured by and/or provided to the sensor device.

It will be further appreciated that, with other embodiments of the invention, in addition or as an alternative to the first and second reference parts 109.5 to 109.9, first and second reference parts may be integrated into the actuator unit 106.3. The first and second reference part may be any suitable part of the actuator unit 106.3 executing a defined relative motion when exerting the force within the suspension system 103. For example, the piston of actuator unit 106.3 may form the first reference part while the cylinder of actuator unit 106.3 forms the second reference part.

It will be further appreciated that, in this case, relative motion does not necessarily have to be directly measured between the first and second reference part using any desired and suitable distance sensor. Rather, as outlined above, it may be provided that the sensor device 109 captures an actual value of at least one status variable representative of a spatial relationship between the first and second reference part. For example, in the case of the hydraulic actuator 106.3, the sensor device may simply capture (by suitable means) the degree of filling of the working chamber defined by the piston and the cylinder of the actuator 106.3 which is also representative of the relative position between the piston and the cylinder.

Finally, it will be appreciated that any desired number of actuators integrating the first and second reference parts may be provided to achieve the desired redundancy and accuracy. For example, two actuators 106.3 may be provided per running gear. Preferably these two actuators 106.3 may be arranged at a location similar to the one of the reference parts 109.5 to 109.9 as outlined above.

### Second embodiment

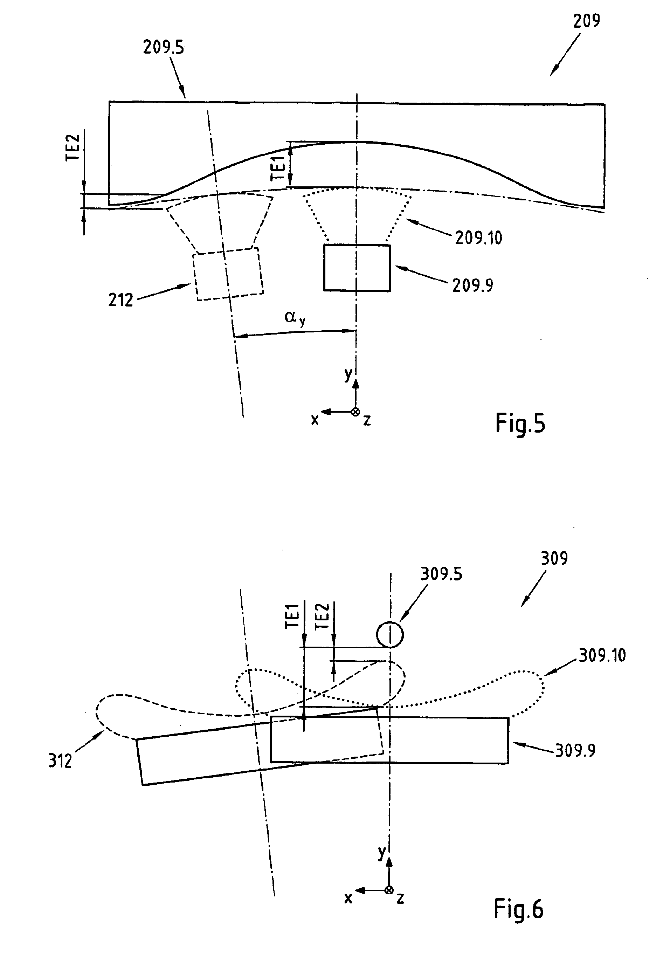

With reference to Figure 5 a further preferred embodiment of a sensor device 209 according to the present invention will now be described in greater detail. The sensor device 209 may replace the sensor device 109 in the vehicle 101 of Figure 1. The sensor device 209, in its basic design and functionality, largely corresponds to the sensor device 109 such that it will be mainly referred to the differences only. Moreover, identical or like components are given the same reference numerals increased by 100. Unless deviating explanations are given in the following it is here explicitly referred to the explanations given above with respect to the features and functions of these components.

The difference with respect to the sensor device 109 lies within the fact that the adaptation of the malfunction analysis to the respective running condition is provided via an adaptation of the geometry of the reference element 209.5 (connected to the wagon body 102). As can be seen from Figure 5, the sensor element 209.9 (connected to the running gear 104) and the reference element 209.5 (connected to the wagon body 102) are arranged such that, in the neutral state of the vehicle, they are transversely but not longitudinally offset with respect to the yaw axis (between the running gear 104 and the wagon body 102).

The adaptation of the admissible transverse excursion under the respective running condition (e.g. TE1 and TE2) and, thus, adaptation of the malfunction analysis is provided by the curvature of the detection surface of the reference element 209.5. It will be appreciated that, by this simple means of modifying the surface of the reference element 209.5 virtually any desired adaptation to the actual running condition of the vehicle may be achieved. It will be appreciated that any suitable geometry may be chosen for the reference element of 209.5. In particular, arbitrary suitable combinations of straight and curved sections may be chosen as needed for the required adaptation of the malfunction analysis.

### Third embodiment

With reference to Figure 6 a further preferred embodiment of a sensor device 309 according to the present invention will now be described in greater detail. The sensor device 309 may replace the sensor device 109 in the vehicle 101 of Figure 1. The sensor device 309, in its basic design and functionality, largely corresponds to the sensor device 109 such that it will be mainly referred to the differences only. Moreover, identical or like components are given the same reference numerals increased by 100. Unless deviating explanations are given in the following it is here explicitly referred to the explanations given above with respect to the features and functions of these components.

The difference with respect to the sensor device 109 lies within the fact that the adaptation of the malfunction analysis to the respective running condition is provided via an adaptation of the capturing characteristics, here the geometry of the field of view 309.10 of the sensor element 309.9 (connected to the running gear 104). As can be seen from Figure 6, the sensor element 309.9 (connected to the running gear 104) and the reference element 309.5 (connected to the wagon body 102) are arranged such that, in the neutral state of the vehicle, they are transversely but not longitudinally offset with respect to the yaw axis (between the running gear 104 and the wagon body 102).

The adaptation of the admissible transverse excursion under the respective running condition (e.g. TE1 and TE2) and, thus, adaptation of the malfunction analysis is provided by the shape, more precisely the curvature of the field of view 309.10 of the sensor element 309.9. It will be appreciated that, by this relatively simple means of modifying shape of the field of view 309.10 (i.e. the sensitivity characteristic) of the sensor element 309.9, virtually any desired adaptation to the actual running condition of the vehicle may be achieved. It will be appreciated that any suitable geometry may be chosen for the field of view 309.10 as well as for the reference element of 309.5. In particular, arbitrary suitable combinations of straight and curved sections may be chosen as needed for the required adaptation of the malfunction analysis.

In the foregoing, the present invention has been described in the context of embodiments were observation of a given kinematic envelope and a given derailment risk has been achieved. It will be appreciated, however, that, with other embodiments of the invention, observation of other criteria or limitations may be an additional or an alternative goal to be achieved. For example, in a similar manner, observation of limitations of a vehicle levelling system (adjusting the level of the wagon body above track level) may be achieved.

Although the present invention in the foregoing has only a described in the context of rail vehicles, it will be appreciated that it may also be applied to any other type of vehicle in order to overcome similar problems with respect to a space saving solution for an emergency suspension.

## Claims

1. A rail vehicle, comprising
- a wagon body (102) and
- a suspension system (103) comprising a running gear (104) supporting said wagon body (102); and
- a sensor device (109; 209; 309) and a control device (107);
**characterized in that**
- said sensor device (109; 209; 309) capturing an actual value of at least one status variable, said status variable being representative of a spatial relationship between a first reference part (109.9; 209.9; 309.9) of said sensor device (109; 209; 309) associated to a part of said running gear (104) and a second reference part (109.5 to 109.8; 209.5; 309.5) of said sensor device (109; 209; 309) associated to said wagon body (102);
- said control device (107) performing a malfunction analysis using said actual value of said status variable, said malfunction analysis assessing fulfillment of at least one predetermined malfunction criterion;
- said control device (107) providing a malfunction signal if said malfunction analysis reveals that said malfunction criterion is fulfilled.

2. The rail vehicle according to claim 1, wherein
- said rail vehicle defines a longitudinal direction, a transverse direction and a height direction;
- said status variable being representative of a transverse displacement between said first reference part (109.9; 209.9; 309.9) and said second reference part (109.5 to 109.8; 209.5; 309.5) in said transverse direction
and/or
- said status variable being representative of an angular yaw displacement between said first reference part (109.9; 209.9; 309.9) and said second reference part (109.5 to 109.8; 209.5; 309.5) about said height direction.

3. The rail vehicle according to claim 1 or 2, wherein
- said sensor device (109; 209; 309) and/or said control device (107) provides an adaptation of said malfunction analysis to an actual running condition of said rail vehicle;
- said actual running condition, in particular, being defined by a running speed of said vehicle and/or a running direction of said vehicle and/or a track geometry of a track currently negotiated by said vehicle;
- said track geometry, in particular, being defined by at least one of a curvature of said track, a superelevation of said track and a torsion of said track.

4. The rail vehicle according to claim 3, wherein
- said sensor device (109; 209; 309) comprises a running condition sensor unit (114) capturing an actual value of a running condition variable;
- said running condition variable being representative of said actual running condition of said rail vehicle;
- said control device (107) executing said malfunction analysis as a function of said actual value of said running condition variable provided by said running condition sensor unit
and/or
- said sensor device (109) modifying its capturing behavior of said status variable as a function of said actual value of said running condition variable.

5. The rail vehicle according to claim 3 or 4, wherein
- said sensor device (109) comprises a status variable sensor unit (109.9) capturing said actual value of said status variable in a sensing direction;
- said status variable sensor unit (109.9) having a capturing behavior in said sensing direction, in particular a sensitivity in said sensing direction, that varies as a function of said actual running condition of said rail vehicle;
- said status variable sensor unit (109.9), in particular, at least section wise having linear and/or spherical capturing characteristics.

6. The rail vehicle according to claim 5, wherein
- said status variable sensor unit (109.9; 209.9; 309.9) comprises a sensing element (109.9) and an associated reference element (109.5 to 109.8; 209.5; 309.5);
- said sensing element (109.9; 209.9; 309.9) capturing a value representative of at least one distance between said sensing element (109.9; 209.9; 309.9) and said reference element (109.5 to 109.8; 209.5; 309.5) as said actual value of said status variable in said sensing direction;
- said sensing element (109.9; 209.9; 309.9) forming said first reference part or said second reference part and said reference element forming the other one of said first reference part and said second reference part;
- said sensing element (109.9; 209.9; 309.9) and said reference element (109.5 to 109.8; 209.5; 309.5) being arranged such that, at least in said sensing direction, a relative position between said sensing element (109.9; 209.9; 309.9) and said reference element (109.5 to 109.8; 209.5; 309.5) varies as a function of said actual running condition of said rail vehicle to provide said variation in said capturing behavior in said sensing direction;
- said sensing element (109.9; 209.9; 309.9) and said reference element (109.5 to 109.8; 209.5; 309.5), in particular, being arranged at a distance, in particular at a distance along said longitudinal direction, from a yaw axis defined by said suspension system (103) between said running gear (104) and said wagon body (102).

7. The rail vehicle according to any one of the preceding claims, wherein
- said sensor device (109; 209; 309) comprises a least one distance sensor (109.9; 209.9; 309.9);
- said at least one distance sensor (109.9; 209.9; 309.9) capturing a least one value representative of a distance between said first reference part and said second reference part;
- said at least one distance sensor (109.9; 209.9; 309.9), in particular, being designed in the manner of an proximity switch.

8. The rail vehicle according to any one of the preceding claims, wherein
- said wagon body (102) is supported on said running gear (104) via a secondary spring system (104.4) of said suspension system (103);
- said first reference part and said second reference part being arranged kinematically parallel to at least a part of said secondary spring system (104.4);
- in particular, said first reference part being connected to a first part of said running gear (104) and said second reference part being connected to a second part of said running gear (104), in particular to a bolster supported via a part of said secondary spring system on said first part of said running gear (104), or said second reference part being connected to said wagon body;
- in particular, said first reference part and/or said second reference part being integrated into a component of said secondary spring system (104.4), in particular in an airspring of said secondary spring system;

9. The rail vehicle according to any one of the preceding claims, wherein
- said suspension system (103) comprises a force exerting device (106.3);
- said force exerting device (106.3), under control of said control device (107), exerting a force within said suspension system (103), said force influencing said at least one status variable;
- said force exerting device, in particular, modifying its operation as a function of said malfunction signal, in particular said force exerting device switching into a deactivated mode of operation in response to said malfunction signal;
- said force exerting device (106.3), in particular, being adapted to exert, in said deactivated mode of operation, a resetting force within said suspension system, said resetting force acting to reset said wagon body (102) into a predetermined neutral position with respect to said running gear (104).

10. The rail vehicle according to claim 9, wherein
- said force exerting device comprises an actuator device (106.3), in particular a tilt actuator adjusting a tilt angle of said wagon body (102) about a tilt axis running in a longitudinal direction of said vehicle;
and/or
- said force exerting device comprises a damper device, in particular a yaw damper device, damping movements between said running gear and said wagon
and/or
- said first reference part and/or said second reference part being integrated into a component of said force exerting device (106.3) in particular in an actuator device (106.3) of said force exerting device.

11. A method for detecting malfunction in a suspension system of a rail vehicle with a wagon body (102) and a suspension system (103) comprising a running gear (104) supporting said wagon body (102), and a sensor device (109;209;309) and a control device (107), **characterized by**
- capturing an actual value of at least one status variable, said status variable being representative of a spatial relationship between a first reference part (109.9; 209.9; 309.9) associated to said running gear (104) and a second reference part (109.5 to 109.8; 209.5; 309.5) associated to said wagon body (102); and
- performing a malfunction analysis using said actual value of said status variable, said malfunction analysis assessing fulfillment of at least one predetermined malfunction criterion;
- providing a malfunction signal if said malfunction analysis reveals that said malfunction criterion is fulfilled.

12. The method according to claim 11, wherein
- said rail vehicle defines a longitudinal direction, a transverse direction and a height direction;
- said status variable being representative of a transverse displacement between said first reference part (109.9; 209.9; 309.9) and said second reference part (109.5 to 109.8; 209.5; 309.5) in said transverse direction
and/or
- said status variable being representative of an angular yaw displacement between said first reference part (109.9; 209.9; 309.9) and said second reference part (109.5 to 109.8; 209.5; 309.5) about said height direction.

13. The method according to claim 11 or 12, wherein
- an adaptation of said malfunction analysis to an actual running condition of said rail vehicle is provided;
- said actual running condition, in particular, being defined by a running speed of said vehicle and/or a running direction of said vehicle and/or a track geometry of a track currently negotiated by said vehicle;
- said track geometry, in particular, being defined by at least one of a curvature of said track, a superelevation of said track and a torsion of said track.

14. The method according to claim 13, wherein
- an actual value of a running condition variable is captured;
- said running condition variable being representative of said actual running condition of said rail vehicle;
- said malfunction analysis being executed as a function of said actual value of said running condition variable
and/or
- modifying a capturing behavior of said status variable as a function of said actual value of said running condition variable.

15. The method according to any one of claims 11 to 14, wherein
- said suspension system (103) comprises a force exerting device (106.3);
- said force exerting device (106.3) exerting a force within said suspension system (103), said force influencing said at least one status variable;
- said force exerting device(106.3), in particular, modifying its operation as a function of said malfunction signal, in particular said force exerting device (106.3) switching into an deactivated mode of operation in response to said malfunction signal;
- said force exerting device (106.3), in particular, being an actuator device, in particular being a tilt actuator adjusting a tilt angle of said wagon body (102) about a tilt axis running in a longitudinal direction of said vehicle;
and/or
- said force exerting device, in particular, being a damper device, in particular being a yaw damper device, damping movements between said running gear (104) and said wagon body (102)
and/or
- said first reference part and/or said second reference part being integrated into a component of said force exerting device (106.3), in particular in an actuator device (106.3) of said force exerting device.

## Patentansprüche

1. Schienenfahrzeug, umfassend:
- einen Wagenkasten (102) und
- ein Fahrwarkssystem (103), das ein Fahrwerk (104) aufweist, das den Wagenkasten (102) trägt, und
- eine Erfassungseinrichtung (109; 209; 309) und eine Steuervorrichtung (107), **dadurch gekennzeichnet, dass**
- die Erfassungseinrichtung (109; 209; 309) einen Istwert von wenigstens einer Statusvariable erfasst, wobei die Statusvariable für eine räumliche Beziehung zwischen einem ersten Referenzteil (109.9; 209.9; 309.9) der Erfassungseinrichtung (109; 209; 309), der einem Teil des Fahrwerks (104) zugeordnet ist, und einem zweiten Referenzteil (109.5 bis 109.8; 209.5; 309.5) der Erfassungseinrichtung (109; 209; 309), der dem Wagenkasten (102) zugeordnet ist, repräsentativ ist,
- die Steuervorrichtung (107) unter Verwendung des Istwertes der Statusvariable eine Fehlfunktionsanalyse durchführt, wobei die Fehlfunktionsanalyse die Erfüllung von wenigstens einem vorbestimmten Fehlfunktionskriterium beurteilt,
- die Steuervorrichtung (107) ein Fehlfunktionssignal bereitstellt, wenn die Fehlfunktionsanalyse zeigt, dass das Fehlfunktionskriterium erfüllt ist.

2. Schienenfahrzeug nach Anspruch 1, wobei
- das Schienenfahrzeug eine Längsrichtung, eine Querrichtung und eine Höhenrichtung definiert,
- die Statusvariable für eine Querauslenkung zwischen dem ersten Referenzteil (109.9; 209.9; 309.9) und dem zweiten Referenzteil (109.5 bis 109.8; 209.5; 309.5) in der Querrichtung repräsentativ ist,
und/oder
- die Statusvariable für eine Gierwinkelauslenkung zwischen dem ersten Referenzteil (109.9; 209.9; 309.9) und dem zweiten Referenzteil (109.5 bis 109.8; 209.5; 309.5) um die Höhenrichtung repräsentativ ist.

3. Schienenfahrzeug nach Anspruch 1 oder 2, wobei
- die Erfassungseinrichtung (109; 209; 309) und/oder die Steuervorrichtung (107) eine Anpassung der Fehlfunktionsanalyse an einen Ist-Fahrzustand des Schienenfahrzeugs zur Verfügung stellt;
- der Ist-Fahrzustand insbesondere von einer Fahrgeschwindigkeit des Fahrzeugs und/oder einer Laufrichtung des Fahrzeugs und/oder einer Gleisgeometrie eines Gleises, das aktuell von dem Fahrzeug befahren wird, definiert wird,
- die Gleisgeometrie insbesondere von wenigstens einem der Folgenden definiert wird: einer Krümmung des Gleises, einer Überhöhung des Gleises und einer Verwindung des Gleises.

4. Schienenfahrzeug nach Anspruch 3, wobei
- die Erfassungseinrichtung (109; 209; 309) eine Fahrzustandssensoreinheit (144) aufweist, die einen Istwert einer Fahrzustandsvariablen erfasst,
- die Fahrzustandsvariable für einen Ist-Fahrzustand des Schienenfahrzeugs repräsentativ ist,
- die Steuervorrichtung (107) die Fehlfunktionsanalyse in Abhängigkeit von dem Istwert der Fahrzustandsvariablen, die von der Fahrzustandssensoreinheit bereitgestellt wird, ausführt,
und/oder
- die Erfassungseinrichtung (109) ihr Erfassungsverhalten der Statusvariable in Abhängigkeit von dem Istwert der Fahrzustandsvariablen modifiziert.

5. Schienenfahrzeug nach Anspruch 3 oder 4, wobei
- die Erfassungseinrichtung (109) eine Statusvariablensensoreinheit (109.9) aufweist, die den Istwert der Statusvariablen in einer Messrichtung erfasst,
- die Statusvariablensensoreinheit (109.9) ein Erfassungsverhalten in der Messrichtung aufweist, insbesondere eine Empfindlichkeit in der Messrichtung aufweist, das in Abhängigkeit von dem Ist-Fahrzustand des Schienenfahrzeugs variiert,
- die Statusvariablensensoreinheit (109.9) insbesondere wenigstens abschnittsweise eine lineare und/oder sphärische Erfassungscharakteristik hat.

6. Schienenfahrzeug nach Anspruch 5, wobei
- die Statusvariablensensoreinheit (109.9; 209.9; 309.9) ein Sensorelement (109.9) und ein zugeordnetes Referenzelement (109.5 bis 109.8; 209.5; 309.5) aufweist,
- das Sensorelement (109.9; 209.9; 309.9) einen Wert, der für wenigstens einen Abstand zwischen dem Sensorelement (109.9; 209.9; 309.9) und dem Referenzelement (109.5 bis 109.8; 209.5; 309.5) repräsentativ ist, als den Istwert der Statusvariablen in der Messrichtung erfasst,
- das Sensorelement (109.9; 209.9; 309.9) den ersten Referenzteil oder den zweiten Referenzteil bildet und das Referenzelement den jeweils anderen ersten Referenzteil bzw. zweiten Referenzteil bildet,
- das Sensorelement (109.9; 209.9; 309.9) und das Referenzelement (109.5 bis 109.8; 209.5; 309.5) so angeordnet sind, dass zumindest in der Messrichtung eine relative Position zwischen dem Sensorelement (109.9; 209.9; 309.9) und dem Referenzelement (109.5 bis 109.8; 209.5; 309.5) in Abhängigkeit von der Ist-Fahrzustand des Schienenfahrzeugs variiert, um die Variation des Erfassungsverhaltens in der Messrichtung bereitzustellen,
- das Sensorelement (109.9; 209.9; 309.9) und das Referenzelement (109.5 bis 109.8; 209.5; 309.5) insbesondere mit einem Abstand, insbesondere einem Abstand entlang der Längsrichtung, von einer Gierachse, die von dem Fahrwerkssystem (103) zwischen dem Fahrwerk (104) und dem Wagenkasten (102) definiert wird, angeordnet sind.

7. Schienenfahrzeug nach einem der vorhergehenden Ansprüche, wobei
- die Erfassungseinrichtung (109; 209; 309) wenigstens einen Abstandssensor (109.9; 209.9; 309.9) aufweist,
- der wenigstens eine Abstandssensor (109.9; 209.9; 309.9) wenigstens einen Wert erfasst, der für einen Abstand zwischen dem ersten Referenzteil und dem zweiten Referenzteil repräsentativ ist,
- der wenigstens eine Abstandssensor (109.9; 209.9; 309.9) insbesondere nach Art eines Näherungsschalters gestaltet ist.

8. Schienenfahrzeug nach einem der vorhergehenden Ansprüche, wobei
- der Wagenkasten (102) über ein Sekundärfedersystem (104.4) des Fahrwerkssystems (103) auf dem Fahrwerk (104) gelagert ist,
- der erste Referenzteil und der zweite Referenzteil kinematisch parallel zu wenigstens einem Teil des Sekundärfedersystems (104.4) angeordnet sind,
- insbesondere der erste Referenzteil mit einem ersten Teil des Fahrwerks (104) verbunden ist und der zweite Referenzteil mit einem zweiten Teil des Fahrwerks (104) verbunden ist, insbesondere mit einer Wiege, die über einen Teil des Sekundärfedersystems auf dem ersten Teil des Fahrwerks (104) gelagert ist, oder der zweite Referenzteil mit dem Wagenkasten verbunden ist,
- insbesondere der erste Referenzteil und/oder der zweite Referenzteil in ein Bauteil des Sekundärfedersystems (104.4), insbesondere in eine Luftfeder des Sekundärfedersystems, integriert ist.

9. Schienenfahrzeug nach einem der vorhergehenden Ansprüche, wobei
- das Fahrwerkssystem (103) eine Kraftausübungsvorrichtung (106.3) aufweist,
- die Kraftausübungsvorrichtung (106.3) unter der Kontrolle der Steuervorrichtung (107) eine Kraft innerhalb des Fahrwerkssystems (103) ausübt, wobei die Kraft die wenigstens eine Statusvariable beeinflusst,
- die Kraftausübungsvorrichtung insbesondere ihre Funktionsweise in Abhängigkeit von dem Fehlfunktionssignal modifiziert, wobei die Kraftausübungsvorrichtung insbesondere als eine Reaktion auf das Fehlfunktionssignal in einen deaktivierten Betriebsmodus umschaltet,
- die Kraftausübungsvorrichtung (106.3) insbesondere dazu ausgebildet ist, in dem deaktivierten Betriebsmodus in dem Fahrwerkssystem eine Rückstellkraft auszuüben, wobei die Rückstellkraft zum Zurückstellen des Wagenkastens (102) in eine vorbestimmte neutrale Stellung in Bezug auf das Fahrwerk (104) wirkt.

10. Schienenfahrzeug nach Anspruch 9, wobei
- die Kraftausübungsvorrichtung eine Aktuatoreinrichtung (106.3) aufweist, insbesondere einen Neigungsaktuator, der einen Neigungswinkel des Wagenkastens (102) um eine Neigungsachse einstellt, die in einer Längsrichtung des Schienenfahrzeugs verläuft,
und/oder
- die Kraftausübungsvorrichtung eine Dämpfervorrichtung aufweist, insbesondere eine Gierdämpfervorrichtung, die Bewegungen zwischen dem Fahrwerk und dem Wagen dämpft,
und/oder
- der erste Referenzteil und/oder der zweite Referenzteil in ein Bauteil der Kraftausübungsvorrichtung (106.3), insbesondere in eine Aktuatoreinrichtung (106.3) der Kraftausübungsvorrichtung, integriert ist.

11. Verfahren zum Erkennen einer Fehlfunktion in einem Fahrwerkssystem eines Schienenfahrzeugs mit einem Wagenkasten (102) und einem Fahrwerkssystem (103), das ein Fahrwerk (104) aufweist, das den Wagenkasten (102) trägt, und einer Erfassungseinrichtung (109; 209; 309) und einer Steuervorrichtung (107), **gekennzeichnet durch**
- Erfassen eines Istwerts von wenigstens einer Statusvariable, wobei die Statusvariable für eine räumliche Beziehung zwischen einem ersten Referenzteil (109.9; 209.9; 309.9), der dem Fahrwerk (104) zugeordnet ist, und einem zweiten Referenzteil (109.5 bis 109.8; 209.5; 309.5), der dem Wagenkasten (102) zugeordnet ist, repräsentativ ist,
- Durchführen einer Fehlfunktionsanalyse unter Verwendung des Istwertes der Statusvariable, wobei die Fehlfunktionsanalyse die Erfüllung von wenigstens einem vorbestimmten Fehlfunktionskriterium beurteilt,
- Bereitstellen eines Fehlfunktionssignals, wenn die Fehlfunktionsanalyse zeigt, dass das Fehlfunktionskriterium erfüllt ist.

12. Verfahren nach Anspruch 11, wobei
- das Schienenfahrzeug eine Längsrichtung, eine Querrichtung und eine Höhenrichtung definiert,
- die Statusvariable für eine Querauslenkung zwischen dem ersten Referenzteil (109.9; 209.9; 309.9) und dem zweiten Referenzteil (109.5 bis 109.8; 209.5; 309.5) in der Querrichtung repräsentativ ist,
und/oder
- die Statusvariable für eine Gierwinkelauslenkung zwischen dem ersten Referenzteil (109.9; 209.9; 309.9) und dem zweiten Referenzteil (109.5 bis 109.8; 209.5; 309.5) um die Höhenrichtung repräsentativ ist.

13. Verfahren nach Anspruch 11 oder 12, wobei
- eine Anpassung der Fehlfunktionsanalyse an eine Ist-Fahrzustand des Schienenfahrzeugs bereitstellt wird;
- die Ist-Fahrzustand insbesondere von einer Fahrgeschwindigkeit des Fahrzeugs und/oder einer Laufrichtung des Fahrzeugs und/oder einer Gleisgeometrie eines Gleises, das aktuell von dem Fahrzeug befahren wird, definiert wird,
- die Gleisgeometrie insbesondere von wenigstens einem der Folgenden definiert wird: einer Krümmung des Gleises, einer Überhöhung des Gleises und einer Verwindung des Gleises.

14. Verfahren nach Anspruch 13, wobei
- ein Istwert einer Fahrzustandsvariablen erfasst wird,
- die Fahrzustandsvariable für die Ist-Fahrzustand des Schienenfahrzeugs repräsentativ ist,
- die Fehlfunktionsanalyse in Abhängigkeit von dem Istwert der Fahrzustandsvariablen ausgeführt wird,
und/oder
- ein Erfassungsverhalten der Statusvariable in Abhängigkeit von dem Istwert der Fahrzustandsvariablen modifiziert wird.

15. Verfahren nach einem der Ansprüche 11 bis 14, wobei
- das Fahrwerkssystem (103) eine Kraftausübungsvorrichtung (106.3) aufweist,
- die Kraftausübungsvorrichtung (106.3) eine Kraft innerhalb des Fahrwerkssystems (103) ausübt, wobei die Kraft die wenigstens eine Statusvariable beeinflusst,
- die Kraftausübungsvorrichtung (106.3) insbesondere ihre Funktionsweise in Abhängigkeit von des Fehlfunktionssignals modifiziert, wobei die Kraftausübungsvorrichtung insbesondere als eine Reaktion auf das Fehlfunktionssignal in einen deaktivierten Betriebsmodus umschaltet,
- die Kraftausübungsvorrichtung (106.3), die insbesondere eine Aktuatoreinrichtung ist, die insbesondere ein Neigungsaktuator ist, der einen Neigungswinkel des Wagenkastens (102) um eine Neigungsachse einstellt, die in einer Längsrichtung des Schienenfahrzeugs verläuft,
und/oder
- die Kraftausübungsvorrichtung, die insbesondere eine Dämpfervorrichtung ist, die insbesondere eine Gierdämpfervorrichtung ist, Bewegungen zwischen dem Fahrwerk (104) und dem Wagenkasten (102) dämpft,
und/oder
- der erste Referenzteil und/oder der zweite Referenzteil in ein Bauteil der Kraftausübungsvorrichtung (106.3), insbesondere in eine Aktuatoreinrichtung (106.3) der Kraftausübungsvorrichtung, integriert ist.

## Revendications

1. Véhicule ferroviaire comprenant
- une caisse (102) et
- un système de suspension (103) comprenant un train de roulement (104) supportant ladite caisse (102) ; et
- un dispositif capteur (109; 209; 309) et un dispositif de commande (107) **caractérisé en ce que**
- ledit dispositif capteur (109; 209; 309) capture une valeur réelle d'au moins une variable d'état, ladite variable d'état étant représentative d'une relation dans l'espace entre, d'une part, une première partie de référence (109.9; 209.9; 309.9) dudit dispositif capteur (109; 209; 309) associée à une partie dudit train de roulement (104) et, d'autre part, une deuxième partie de référence (109.5 à 109.8; 209.5; 309.5) dudit dispositif capteur (109; 209; 309) associé à ladite caisse (102) ;
- ledit dispositif de commande (107) réalisant une analyse de malfonctionnement utilisant ladite valeur actuelle de ladite variable d'état, ladite analyse de malfonctionnement évaluant si au moins un critère de malfonctionnement prédéterminé est satisfait ;
- ledit dispositif de commande (107) fournissant un signal de malfonctionnement si ladite analyse de malfonctionnement révèle que le critère de malfonctionnement est satisfait.

2. Véhicule ferroviaire selon la revendication 1, dans lequel
- ledit véhicule ferroviaire définit une direction longitudinale, une direction transversale et une direction de hauteur ;
- ladite variable d'état étant représentative d'un déplacement relatif transversal entre ladite première partie de référence (109.9; 209.9; 309.9) et ladite deuxième partie de référence (109.5 à 109.8; 209.5; 309.5) dans ladite direction transversale
et/ou
- ladite variable d'état étant représentative d'un déplacement de lacet angulaire entre ladite première partie de référence (109.9; 209.9; 309.9) et ladite deuxième partie de référence (109.5 à 109.8; 209.5; 309.5) autour de ladite direction de hauteur.

3. Véhicule ferroviaire selon la revendication 1 ou 2, dans lequel
- ledit dispositif capteur (109; 209; 309) et/ou ledit dispositif de commande (107) réalise une adaptation de ladite analyse de malfonctionnement à une condition de roulement réelle dudit véhicule ferroviaire ;
- ladite condition de roulement réelle, en particulier, étant définie par une vitesse de roulement dudit véhicule et/ou une direction de roulement dudit véhicule et/ou une géométrie de voie d'une voie que ledit véhicule négocie actuellement ;
- ladite géométrie de voie, en particulier, étant définie par au moins une courbure de ladite voie, un relèvement de ladite voie et une torsion de ladite voie.

4. Véhicule ferroviaire selon la revendication 3, dans lequel
- ledit dispositif capteur (109; 209; 309) comprend une unité de capteur de condition (114) capturant une valeur réelle d'une variable de condition de roulement ;
- ladite variable de condition de roulement étant représentative de ladite condition de roulement réelle dudit véhicule ferroviaire ;
- ledit dispositif de commande (107) exécutant ladite analyse de malfonctionnement en fonction de ladite valeur réelle de ladite variable de condition de roulement fournie par ladite unité de capteur de condition de roulement
et/ou
- ledit dispositif capteur (109) modifiant son comportement de capture de ladite variable d'état en fonction de ladite valeur réelle de ladite variable de condition de roulement.

5. Véhicule ferroviaire selon la revendication 3 ou 4, dans lequel
- ledit dispositif capteur (109) comprend une unité de capteur de variable d'état (109.9) qui capture ladite valeur réelle de ladite variable d'état dans une direction de détection ;
- ladite unité de capteur de variable d'état (109.9) ayant un comportement de capture dans ladite direction de détection, en particulier une sensibilité dans ladite direction de détection, qui varie en fonction de ladite condition de roulement réelle dudit véhicule ferroviaire ;
- ladite unité de capteur de variable d'état (109.9), en particulier, au moins par section ayant des caractéristiques de capture linéaire et/ou sphérique.

6. Véhicule ferroviaire selon la revendication 5, dans lequel
- ladite unité de capture de variable d'état (109.9; 209.9; 309.9) comprend un élément de détection (109.9) et un élément de référence associé (109.5 à 109.8; 209.5; 309.5) ;
- ledit élément de détection (109.9; 209.9; 309.9) capturant une valeur représentative d'au moins une distance entre ledit élément de détection (109.9; 209.9; 309.9) et ledit élément de référence (109.5 à 109.8; 209.5; 309.5) comme ladite valeur réelle de ladite variable d'état dans ladite direction de détection ;
- ledit élément de détection (109.9; 209.9; 309.9) formant ladite première partie de référence ou ladite deuxième partie de référence, et ledit élément de référence formant l'autre partie parmi ladite première partie de référence et ladite deuxième partie de référence ;
- ledit élément de détection (109.9; 209.9; 309.9) et ledit élément de référence (109.5 à 109.8; 209.5; 309.5) étant agencé pour que, au moins dans ladite direction de détection, une position relative entre ledit élément de détection (109.9; 209.9; 309.9) et ledit élément de référence (109.5 à 109.8; 209.5; 309.5) varie en fonction de ladite condition de roulement réelle dudit véhicule ferroviaire afin de fournir ladite variation dans ledit comportement de capture dans ladite direction de détection ;
- ledit élément de détection (109.9; 209.9; 309.9) et ledit élément de référence (109.5 à 109.8; 209.5; 309.5), en particulier, étant agencés à une distance, en particulier à une distance le long de ladite direction longitudinale, à partir d'un axe de lacet défini par ledit système de suspension (103) entre ledit train de roulement (104) et ladite caisse (102).

7. Véhicule ferroviaire selon l'une quelconque des revendications précédentes, dans lequel
- ledit dispositif capteur (109; 209; 309) comprend au moins un capteur de distance (109.9; 209.9; 309.9) ;
- ledit au moins un capteur de distance (109.9; 209.9; 309.9) capturant au moins une valeur représentative d'une distance entre ladite première partie de référence et ladite deuxième partie de référence ;
- ledit au moins un capteur de distance (109.9; 209.9; 309.9), en particulier, étant conçus à la manière d'un contacteur de proximité.

8. Véhicule ferroviaire selon l'une quelconque des revendications précédentes, dans lequel
- ladite caisse (102) prend appui sur ledit train de roulement (104) via un système de ressorts secondaire (104.4) dudit système de suspension (103) ;
- ladite première partie de référence et ladite deuxième partie de référence étant agencées de manière cinématiquement parallèle à au moins une partie dudit système de ressorts secondaire (104.4) ;
- en particulier, ladite première partie de référence étant connectée à une première partie dudit train de roulement (104) et, ladite deuxième partie de référence étant connectée à une deuxième partie dudit train de roulement (104), en particulier à un berceau prenant appui, par l'intermédiaire d'une partie dudit système de ressorts secondaire, sur ladite première partie dudit train de roulement (104), ou ladite deuxième partie de référence étant connectée à ladite caisse ;
- en particulier, ladite première partie de référence et/ou ladite deuxième partie de référence étant intégrée à un composant dudit système de ressorts secondaire (104.4), en particulier dans un ressort pneumatique dudit système de ressorts secondaire.

9. Véhicule ferroviaire selon l'une quelconque des revendications précédentes, dans lequel
- ledit système de suspension (103) comprend un dispositif exerçant une force (106.3) ;
- ledit dispositif exerçant une force (106.3), sous la commande dudit dispositif de commande (107), exerçant une force à l'intérieur dudit système de suspension (103), ladite force influençant ladite au moins une variable d'état ;
- ledit dispositif exerçant une force, en particulier, modifiant son fonctionnement en fonction dudit signal de malfonctionnement, en particulier ledit dispositif exerçant une force en passant à un mode opératoire désactivé en réponse audit signal de malfonctionnement ;
- ledit dispositif exerçant une force (106.3), en particulier, étant conçu pour exercer, dans ledit mode opératoire désactivé, une force de rappel au sein dudit système de suspension, ladite force de rappel agissant pour remettre ladite caisse (102) à une position neutre prédéterminée par rapport au train de roulement (104).

10. Véhicule ferroviaire selon la revendication 9, dans lequel
- ledit dispositif exerçant une force comprend un dispositif d'actionneur (106.3), en particulier un actionneur d'inclinaison qui ajuste l'angle d'inclinaison de ladite caisse (102) autour d'un axe d'inclinaison allant dans une direction longitudinale dudit véhicule ;
et/ou
- ledit dispositif exerçant une force comprend un dispositif amortisseur, en particulier un dispositif amortisseur de lacet, qui amortit les mouvements entre ledit train de roulement et ledit wagon
et/ou
- ladite première partie de référence et/ou ladite deuxième partie de référence étant intégrée à un composant dudit dispositif exerçant une force (106.3), en particulier un dispositif d'actionneur (106.3) dudit dispositif exerçant une force.

11. Procédé de détection de malfonctionnement dans un système de suspension d'un véhicule ferroviaire avec une caisse (102) et un système de suspension (103) comprenant un train de roulement (104) supportant ladite caisse (102), et un dispositif capteur (109; 209; 309) et un dispositif de commande (107), **caractérisé par**:
- la capture d'une valeur réelle d'au moins une variable d'état, ladite variable d'état étant représentative d'une relation dans l'espace entre une première partie de référence (109.9; 209.9; 309.9) associée audit train de roulement (104) et une deuxième partie de référence (109.5 à 109.8; 209.5; 309.5) associée à ladite caisse (102) ; et
- la réalisation d'une analyse de malfonctionnement utilisant ladite valeur actuelle de ladite variable d'état, ladite analyse de malfonctionnement évaluant si au moins un critère de malfonctionnement prédéterminé est satisfait ;
- la fourniture d'un signal de malfonctionnement si ladite analyse de malfonctionnement révèle que le critère de malfonctionnement est satisfait.

12. Procédé selon la revendication 11, dans lequel
- ledit véhicule ferroviaire définit une direction longitudinale, une direction transversale et une direction de hauteur ;
- ladite variable d'état étant représentative d'un déplacement relatif transversal entre ladite première partie de référence (109.9; 209.9; 309.9) et ladite deuxième partie de référence (109.5 à 109.8; 209.5; 309.5) dans ladite direction transversale
et/ou
- ladite variable d'état étant représentative d'un déplacement de lacet angulaire entre ladite première partie de référence (109.9; 209.9; 309.9) et ladite deuxième partie de référence (109.5 à 109.8; 209.5; 309.5) autour de ladite direction de hauteur.

13. Procédé selon la revendication 11 ou 12, dans lequel
- une adaptation de ladite analyse de malfonctionnement à une condition de roulement réelle dudit véhicule ferroviaire est réalisée ;
- ladite condition de roulement réelle, en particulier, étant définie par une vitesse de roulement dudit véhicule et/ou une direction de roulement dudit véhicule et/ou une géométrie de voie d'une voie que ledit véhicule négocie actuellement ;
- ladite géométrie de voie, en particulier, étant définie par au moins une courbure de ladite voie, un relèvement de ladite voie et une torsion de ladite voie.

14. Procédé selon la revendication 13, dans lequel
- une valeur réelle d'une variable de condition de roulement est capturée ;
- ladite variable de condition de roulement est représentative de ladite condition de roulement réelle dudit véhicule ferroviaire ;
- ladite analyse de malfonctionnement est exécutée en fonction de ladite valeur réelle de ladite variable de condition de roulement et/ou
- un comportement de capture de ladite variable d'état est modifié en fonction de ladite valeur réelle de ladite variable de condition de roulement.

15. Procédé selon l'une quelconque des revendications 11 à 14, dans lequel
- ledit système de suspension (103) comprend un dispositif exerçant une force (106.3) ;
- ledit dispositif exerçant une force (106.3) exerçant une force dans ledit système de suspension (103), ladite force influençant ladite au moins une variable d'état ;
- ledit dispositif exerçant une force (106.3), en particulier, modifiant son fonctionnement en fonction dudit signal de malfonctionnement, en particulier ledit dispositif exerçant une force (106.3) passant à un mode opératoire désactivé en réponse audit signal de malfonctionnement ;
- ledit dispositif exerçant une force (106.3), en particulier, étant un dispositif d'actionneur, en particulier un actionneur d'inclinaison qui ajuste un angle d'inclinaison de ladite caisse (102) autour d'un axe d'inclinaison allant dans une direction longitudinale dudit véhiculé;
et/ou
- ledit dispositif exerçant une force, en particulier, étant un dispositif amortisseur, en particulier un dispositif amortisseur de lacet, amortissant les mouvements entre ledit train de roulement (104) et ladite caisse (102) et/ou
- ladite première partie de référence et/ou ladite deuxième partie de référence étant intégrée à un composant dudit dispositif exerçant une force (106.3), en particulier dans un dispositif d'actionneur (106.3) dudit dispositif exerçant une force.
